# EUROPEAN PATENT APPLICATION

(11) **EP 4 273 588 A1**
(43) Date of publication of application: **08.11.2023**
(21) Application number: 22171533.7
(22) Date of filing: 04.05.2022
(51) Int. Cl.: G01T 1/17

(54) **PHOTON COUNTING DETECTOR AND PHOTON COUNTING METHOD**

(71) Applicant: Koninklijke Philips N.V., 5656 AG Eindhoven (NL)
(72) Inventor: SOLF, Torsten Jörn, Eindhoven (NL); FRACH, Thomas, Eindhoven (NL); SHABER, Mezbah Uddin, Eindhoven (NL)
(74) Representative: Philips Intellectual Property & Standards

(57) **Abstract**

The present invention relates to a photon counting detector and method. The detector (20) comprises a scintillator (21) configured to convert incident gamma radiation into optical photons, a pixelated photodetector (22) configured to detect the flux of optical photons, and circuitry (23). The circuitry (23) is configured to iteratively determine, per photodetector pixel, a photon count by accumulating the number of optical photons detected by the respective photodetector pixel during an integration time, assign the photon count, per photodetector pixel, to one of multiple energy bins by use of energy thresholds separating the multiple energy bins, and dynamically adapt, per photodetector pixel or group of photodetector pixels, the energy thresholds for use in a subsequent iteration based on information on the estimated photon count of said photodetector pixel or group of photodetector pixels in the subsequent iteration.

## Description

### FIELD OF THE INVENTION

The present invention relates to a photon counting detector, a corresponding photon counting method and an imaging apparatus comprising a photon counting detector for detection of radiation, in particular gamma radiation and x-ray radiation.

### BACKGROUND OF THE INVENTION

Photon counting has conventionally been implemented using photomultiplier tube (PMT) detectors, which comprise a light-sensitive photocathode and a set of "multiplier" anode terminals. The photocathode emits at least one electron responsive to impingement of a photon, and the electron(s) in turn strike successive anode terminals with each such event causing emission of a cascade of electrons, thus producing a multiplication effect that results in a measurable electrical pulse. A PMT is capable of high speed photon counting. PMT detectors have disadvantages including being relatively bulky discrete devices with large optical windows that operate at high voltage and are susceptible to failure due to the evacuated tube design and the high operational electrical voltage.

Silicon photomultiplier (SiPM) devices have been developed to overcome some of these disadvantages, and to provide photon-counting detectors that are readily integrated with silicon-based signal/data processing circuitry. In some embodiments, a SiPM device employs an avalanche photodiode as the light sensor. When biased above its breakdown voltage, the avalanche diode goes into break down responsive to impingement of a single photon. Such a device is sometimes called a single photon avalanche diode (SPAD) detector. In a typical SPAD detector, the avalanche photodiode is reverse biased above its break down voltage and is in series with a quenching resistor. Impingement of a single photon causes the p-n junction to break down in a multiplicative (i.e., "avalanche") cascade of electrons that flow in the SPAD detector as a measurable electrical current. This current is quenched relatively quickly as voltage over the resistor due to the current flow lowers the reverse bias across the avalanche diode to a level below its break down voltage. Additionally or alternatively, an active quenching sub-circuit comprising (for example) one or more diodes, resistors, and/or transistors can provide more rapid quenching.

Digital silicon photomultipliers (dSiPMs) composed of single photon avalanche detector (SPAD) matrices are used as photon counting detectors (sometimes also called photon detectors) in high-performance PET/CT systems to detect single gamma quanta. Coupled to a time-of-flight capable scintillator, the fast trigger logic of the digital silicon photomultiplier enables time resolution in the range of 100 ps - 200 ps. Time resolution of these systems is limited, among others, by the time spread of the scintillation process. New detector concepts using prompt photons have been proposed, potentially offering improvement of time resolution significantly below 100 ps.

However, high count rates limit the dynamic range especially in direct beam or body peripheries with low attenuation. Thus, for high count rates, the pulses overlap in time (optical pile-up), deteriorating the received energy resolution noticeably.

### SUMMARY OF THE INVENTION

It is an object of the present invention to resolve or at least reduce the problem of pile-up of detector pixels.

In a first aspect of the present invention a photon counting detector is presented comprising:
a scintillator configured to convert incident gamma radiation into optical photons;
a pixelated photodetector configured to detect the flux of optical photons; and
circuitry configured to iteratively
   - determine, per photodetector pixel, a photon count by accumulating the number of optical photons detected by the respective photodetector pixel during an integration time,
   - assign the photon count, per photodetector pixel, to one of multiple energy bins by use of energy thresholds separating the multiple energy bins, and
   - dynamically adapt, per photodetector pixel or group of photodetector pixels, the energy thresholds for use in a subsequent iteration based on information on the estimated photon count of said photodetector pixel or group of photodetector pixels in the subsequent iteration.

In a further aspect of the present invention a corresponding photon counting method is presented.

In a still further aspect of the present invention an imaging apparatus comprising a photon counting detector as disclosed herein is presented.

Preferred embodiments of the invention are defined in the dependent claims.

High count rates limit the dynamic range especially in direct beam or body peripheries with low attenuation. As light yield of very fast scintillators is normally quite low, it is not beneficial to use very short integration times (below the decay time of the scintillator), which would result in a poor energy resolution and loss in spectral information. Thus, a compromise should be found to balance spectral separation vs. count rate capability, which is normally fixed by design and cannot be adapted to the individual scan dynamically. Further, for high count rates, the pulses overlap in time and lead to optical pile-up, which deteriorates the received energy resolution.

The present invention overcomes or at least reduces this drawback by dynamical adaptation of at least the energy threshold to provide best possible separation of gamma quanta and their individual energies. A pixel-based adaptation of the energy thresholds (the signal is measured in optical photons) is proposed to acquire energy histograms with stationary energy thresholds (preferably in keV). This solution also provides a compromise between spectral separation and count rate capability.

In an embodiment the circuitry is configured to dynamically adapt, per photodetector pixel or group of photodetector pixels, the energy thresholds and the integration time for use in the subsequent iteration. This further improves the solution of the compromise between spectral separation and count rate capability, in particular by an adaptive and dynamically adjustable integration time (integration length) in combination with an automated energy threshold adaptation for the energy histogram.

In another embodiment the circuitry is configured to dynamically adapt, per photodetector pixel or group of photodetector pixels, the energy thresholds and/or the integration time for use in the subsequent iteration based on one or more of:
- one or more settings of a detection device comprising the photon counting detector,
- a current of a radiation source of a detection device comprising the photon counting detector,
- position information of an examination object, with respect to the photon counting detector,
- information on one or more earlier photon counts from the same and/or neighboring photodetector pixels and/or from the same and/or neighboring groups of pixels,
- operating temperature of the photon counting detector, and
- one or more operating parameters of the same and/or neighboring photodetector pixels and/or of the same and/or neighboring groups of pixels and/or of pixel elements thereof.

The operation temperature may be useful since the scintillator light yield as well as the detector sensitivity generally depend on operating temperature. The operating parameters (such as bias voltage and recharge timing in case of a SPAD detector) can compensate for temperature coefficient of the scintillator for example to generate a stable operating point.

The circuitry may be configured to increase the energy thresholds and/or the integration time the lower the estimated photon count is. Such a dynamic adaptation of the energy threshold and/or integration time to the actual count rate allows a longer integration time and improved energy resolution at lower rates, and shorter integration time at high rates to reduce pile-up effects automatically.

The circuitry may further be configured to adapted the energy thresholds and/or the integration time by computing them based on a function or by taking them from a look-up table. This provides a simple but efficient implementation.

In another embodiment the circuitry may be configured to adapt the energy thresholds and the integration time by selecting one of several integration modes each indicating respective energy thresholds and integration time. Thus, for each of several integration modes a corresponding energy threshold and integration time may be predetermined so that only the integration mode needs to be selected, e.g. by a control signal.

Preferably, the circuitry may be configured to limit the energy thresholds and/or the integration time not to exceed maximum energy thresholds and/or maximum integration time and not to fall below minimum energy thresholds and/or minimum integration time to avoid on the one hand that some photon counts get lost and on the other hand that potential error are counted as photons.

The pixelated photodetector may preferably be a silicon photomultiplier (SiPM) detector, wherein each detector pixel comprises an array of silicon avalanche photo diodes (SPADs). Hereby, the circuitry may be configured to dynamically adapt, per photodetector pixel or group of photodetector pixels, in addition to the energy thresholds a recharge time and/or bias voltage of the SPADs of the respective photodetector pixel or group of photodetector pixels for use in the subsequent iteration. For instance, to compensate negative temperature coefficients of scintillators the bias voltage may be increased (e.g. by a few mV). Additionally (or alternatively), the recharge time (SPAD deadtime) of each SPAD in the pixel matrix can be reduced (e.g. by a few ns) to lower deadtime effects and therefore increase the expectation value of the summed photon count.

In an embodiment the circuitry may be configured to apply a deadtime correction function to the photon counts assigned to the energy bins, wherein the deadtime correction function is dynamically adapted based on the integration time. For instance, the a correction factor may be applied as correction function that dynamically increases with an increase of the integration time and with an increase of radiation dose of the incident gamma radiation. This ensures that the ratio of the count rates of the different energy bins remains substantially constant in case of a change of the integration time.

In another embodiment the circuitry may be configured to dynamically adapt the energy thresholds and/or the integration time per integration period (typical values are approximately 100 µs).

The claimed imaging apparatus that comprises a photon counting detector as disclosed herein may e.g. be a PET apparatus, a CT apparatus, a SPECT apparatus, a Time-of-Flight (TOF) PET apparatus, or a Compton camera.

### BRIEF DESCRIPTION OF THE DRAWINGS

These and other aspects of the invention will be apparent from and elucidated with reference to the embodiment(s) described hereinafter. In the following drawings
Fig. 1 shows diagrams of typical decay curves and integral curves (depending on integration time) for a conventional photon counting detector.
Fig. 2 shows a schematic diagram of an embodiment of a photon counting detector according to the present invention.
Fig. 3 shows diagrams of output rates and corresponding correction factors depending on integration time for a photon counting detector according to an embodiment of the present invention.
Fig. 4 shows diagrams of different sets of energy thresholds depending on integration time and energy resolution depending on gamma ray energy for a photon counting detector according to an embodiment of the present invention.

### DETAILED DESCRIPTION OF THE INVENTION

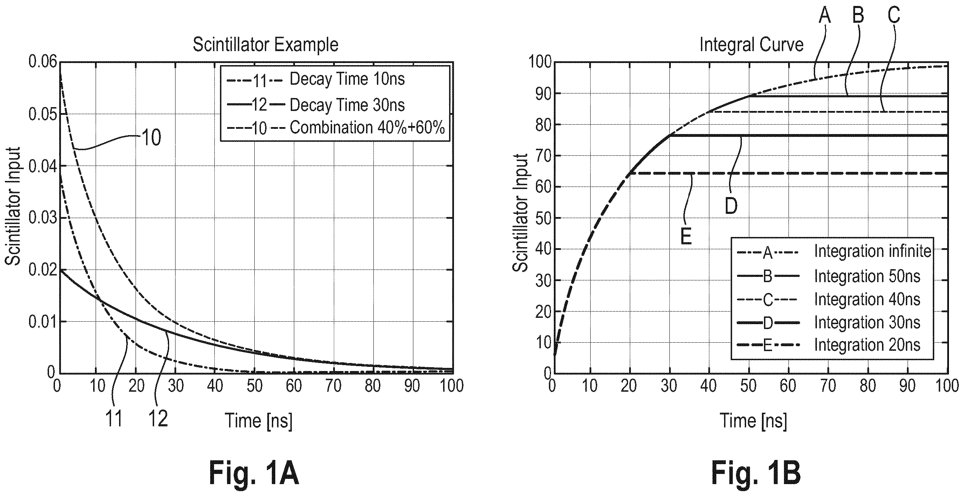

Fig. 1 shows diagrams of typical decay curves and integral curves (depending on integration time) for a conventional photon counting detector. Fast scintillators often exhibit two or more decay components with different weighting, depending on the material properties including chemical composition, energy bands, excitation stages, doping, and co-doping profiles, etc. Fig. 1A shows a typical scintillator decay curve 10, which is composed of a short decay component 11 and a long decay component 12. Fig. 1B shows the integral for this example with different integration time (also called integration lengths).

In case of single gamma counting, the spectral separation depends strongly on the amount of collected light of the pixelated photodetector, e.g. through a SPAD matrix. As an example, the shorter integration (e.g. of 20 ns; curve E in Fig. 1B) may e.g. collect about 63 % of the light whereas the longer integration (e.g. of 40 ns; curve C in Fig. 1B) may e.g. collect about 86 % of the light, resulting in an improved energy resolution with the drawback of higher count loss at high rates.

The present invention describes how to overcome this compromise by an automated energy threshold adaptation for the energy histogram, preferably in combination with an adaptive and dynamically adjustable integration time. According to an embodiment a dynamic adaptation of the integration time to the actual count rate is used, allowing longer integration time and improved energy resolution at lower rates, and shorter integration time at high rates to reduce pile-up effects automatically.

The detection system of a CT is typically rotating with the source and the curved detector is typically built of a multitude of individual modules, each comprising a multitude of sensor tiles. Each sensor tile is electrically, mechanically, and thermally connected to a module, providing power, clock, signals, etc. The sensor tile is composed of a multitude of silicon dies, each having a multitude of pixels, aligned with the scintillation array pixel pitch.

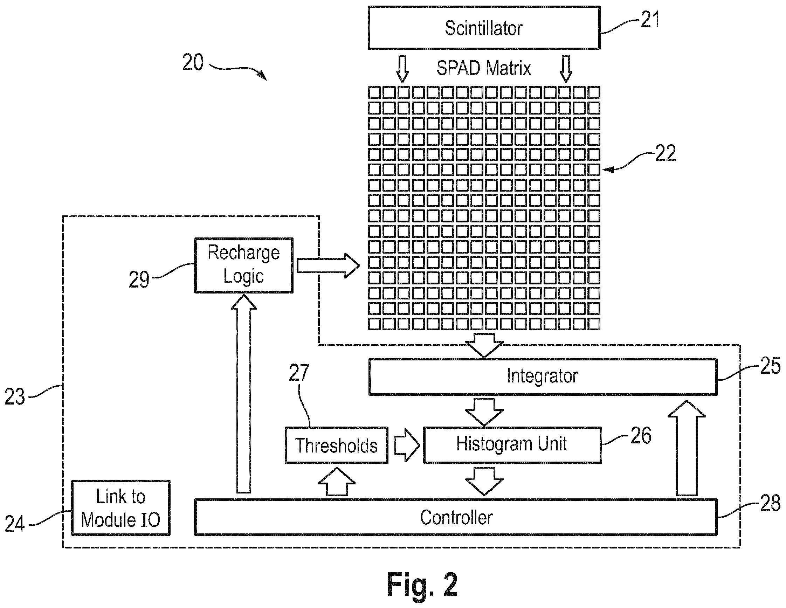

Fig. 2 shows a schematic diagram of an embodiment of a photon counting detector 20 according to the present invention. The detector 20 generally comprises a scintillator 21 configured to convert incident gamma radiation into optical photons, a pixelated photodetector (represented by a SPAD matrix 22) configured to detect the flux of optical photons, and circuitry 23 (or corresponding units) configured to further process / evaluate the detected optical photons.

In more detail, Fig. 2 shows a single pixel of a sensor die including - in this embodiment - a SPAD matrix 22, on one hand, and a link 24 to an IO (input / output) module on the other hand. The scintillation light of from gamma rays is collected by the SPAD matrix 22. A programmable photon accumulator 25 computes the sum of each acquired pulse (in particular a programmable number of samples) and stores it in a histogram unit 26 with configurable energy thresholds. The suitable energy thresholds, stored e.g. in a threshold memory 27, for the histogram may be computed by a controller 28 (or processor), which considers one or more parameters. It directly adapts the energy thresholds and, optionally, recharge logic 29. The resulting histogram data and integration setting may be fed into a downstream datalink 24 to the IO module.

The energy thresholds may be implemented in the digital domain using N-bit comparators so that they can be adapted with single detected photon precision. As the light is collected by single optical photon detection microcells, the energy of the detected x-ray quanta depends on the effective light yield of the scintillator and "integration" time (number of photon count samples to be accumulated). Assuming a collection efficiency of 1 ph per keV (i.e., 1 detected optical photon per keV as an example; but it could also be higher or lower depending on the implementation, e.g. 2x or 3x higher or lower), the energy thresholds can be adjusted in steps of 1 keV.

In an embodiment the controller may adapt integration time, thresholds and recharge timing based on feedback from one or more of the following parameters:
- System settings like acquisition modes (fixed/variable integration)
- System rate estimates derived from tube current, patient information, camera, etc.
- Local rate estimates from previous integration periods (IPs) from histogram counts of this pixel and/or neighboring pixels
- Operating temperature
- Bias voltage
- Recharge time

The adaptation target is to realize suitable energy histograms with constant effective thresholds to deliver fixed ratios between energy bins (in case of fixed input spectra) for variable tube currents.

It shall be noted that the scintillator light yield as well as the detector sensitivity depend on operating temperature. Higher temperature reduces overvoltage (at fixed bias voltage) and light yield of the scintillator decreases as well with temperature. Both effects can be compensated together by increasing the bias voltage. As this process is fairly slow (within seconds or a few tenth of seconds), the alternative to change threshold and integration time can be realized ultimately fast within microseconds.

Rising count rates require shorter integration and higher thresholds, whereas rising temperatures require lower thresholds and/or longer integration times to guarantee gain stability.

The spatial and temporal flexibility (basically down to single pixel level and IP level) allows an adaptive data acquisition with optimal spectral separation of the energy bins and minimal deadtime effects.

A practical example of the present invention describes an implementation running at e.g. 200 MHz while computing an energy estimate every clock cycle of e.g. 5ns. In an embodiment a variable set of integration times of e.g. 20 ns, 30 ns, 40 ns, and 50 ns may be defined, leading to a set of four different energy thresholds for every energy bin. In this example, three energy bins at 30 keV 60 keV and 90 keV are used. All numbers are arbitrarily chosen and can vary in practical implementations.

Consequently, the histograms of the different integration modes require suitable deadtime correction functions, which are dose-dependent (which could be implemented by a two-dimensional function or look-up-table).

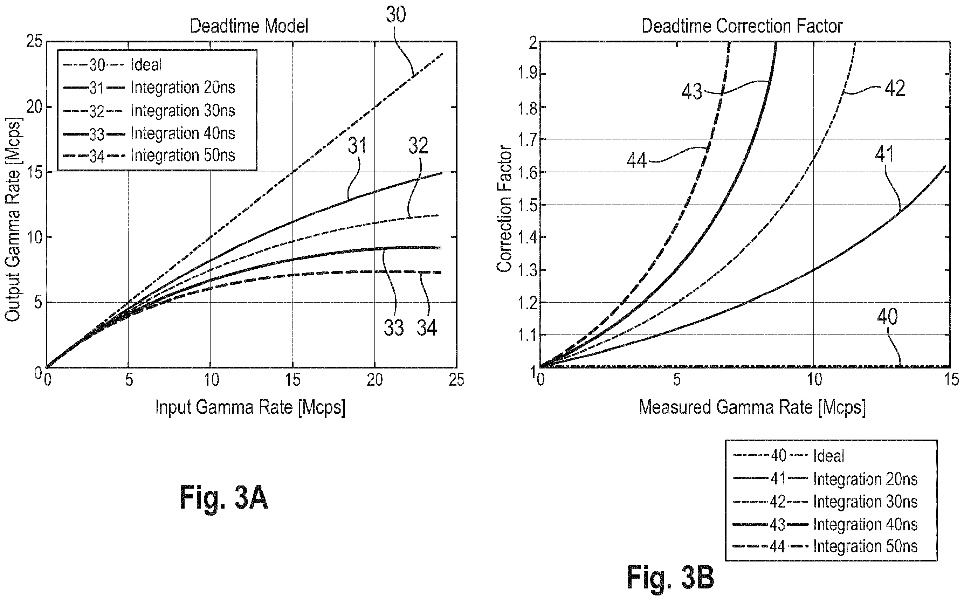

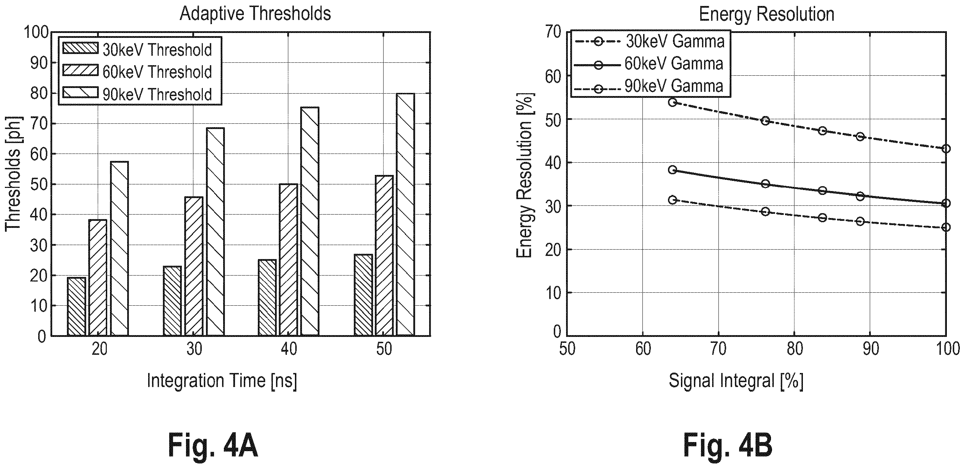

Fig. 3 shows diagrams of output rates (Fig. 3A) and corresponding correction factors (Fig. 3B) depending on integration time for a photon counting detector according to an embodiment of the present invention. As can be seen from Fig. 3, the output rates (i.e. the sensitivity) depend on the effective integration time, which also leads to different correction factors for every energy bin (here only one is shown) and integration setting. This dependency of the sensitivity on the integration time, intrinsic decay curve, and gamma ray spectrum leads to a deadtime model as shown in Fig. 3A and resulting correction factors as shown in Fig. 4B, depending on integration time.

The advantage of the increased integration time at lower rates can be seen in Fig. 4, as longer integration leads to better energy discrimination and improved spectral information per energy bin. Fig. 4 shows diagrams of different sets of energy thresholds depending on integration time and energy resolution depending on gamma ray energy for a photon counting detector according to an embodiment of the present invention. Fig. 4A particularly shows three sets of adaptive energy thresholds depending on the desired physical threshold (in keV) for a set of different integration times. The different energy resolutions as a function of gamma ray energy are shown in Fig. 4B.

One of the features of the present invention is the dynamical adaptation of the energy thresholds on single optical photon level depending on the chosen integration setting. The integration setting can e.g. be changed after every integration period (IP) dynamically and for each pixel individually. In general, the entire configuration of the sensor can be written in background during one IP and become active automatically in the next IP. This may, in an embodiment, also include the recharge time and/or integration time and/or SPAD inhibit map, etc. By such an inhibit map, each SPAD of the pixel matrix can be enabled or disabled via a sequential access memory (SAM). It is normally used to disable noisy SPADs during initialization, but it can also be used to fine tune the gain dynamically from integration period to integration period (which may be in the range of 50 µm to 500 µs and typically around 100 µs).

For additional fine tuning of the energy thresholds (operating at single optical photon resolution), additional parameters which influence the light collection efficiency may be adapted, especially for sub-photon threshold adaptations: Variation of the recharge logic with different recharge timings influence the effective deadtime for every SPAD and therefore acquired gain. Also, small variations on the inhibit map can adjust the effective gain similarly. Compared to the two mentioned parameters which can be used on single pixel level and single IP level, the bias voltage per sensor die or sensor tile may be adjusted for fine scale gain adaptations (affecting larger sensitive areas).

For downstream data correction it may be provided to store and send the used integration setting (as e.g. reflected in the table below) for each acquired histogram. This can be realized on pixel level and IP for highest granularity and flexibility. For simplification, the settings can also be set commonly for multiple pixels of a die, like row-based selection, or column-based, sub-pixel based, or die-based, which reduces the payload of the transmitted data.

In an implementation four (or any other number of) integration modes may be used which require only two extra bits in the data stream, which is still 20-40 times smaller than the histogram information (consuming 40 to 80 bits for the energy bin counters). It is assumed that each integration mode identifies a set of pre-defined energy thresholds (and, preferably, integration times and/or recharge timings) as shown in this exemplary Table 1:

**Table 1**

| Integration | Integration | Threshold | Threshold | Threshold |
|---|---|---|---|---|
| [ns] | setting | for 30 keV [ph] | for 60 keV [ph] | for 90 keV [ph] |
| 20 | 0 | 19 | 38 | 58 |
| 30 | 1 | 23 | 46 | 69 |
| 40 | 2 | 25 | 50 | 75 |
| 50 | 3 | 27 | 53 | 80 |

The example of Table 1 is given for three different gamma energies: 30 keV, 60 keV and 90 keV. The unit [ph] corresponds to the detected number of photons in a gamma pulse. The scaling factor to keV is known, but different for each setting. As mentioned above, the integration time can also be set by the system via the IO module upfront, so that the local controller realizes a given setting (and does not adapt autonomously).

The following Table 2 shows an example for the expected photon energies for 30 ns integration by adaptation of an inhibit map when using a total number of 128 SPADs for the matrix:

**Table 2**

| | Threshold | Threshold | Threshold |
|---|---|---|---|
| Enabled cells | for 30 keV [ph] | for 60 keV [ph] | for 90 keV [ph] |
| 93 % | 23.0 | 46.0 | 69.0 |
| 94% | 23.2 | 46.4 | 69.6 |
| 95 % | 23.4 | 46.8 | 70.2 |
| 96% | 23.6 | 47.2 | 70.8 |

The following Table 3 shows an example for the expected photon energies for 30 ns integration by adaptation of the recharge time. Shorter recharge time reduces the effective deadtime of the SPAD matrix and increases the gain. For high photon energies, this effect is stronger due to the high optical photon flux at scintillation start:

**Table 3**

| SPAD Recharge Time | Threshold | Threshold | Threshold |
|---|---|---|---|
| [ns] | for 30 keV [ph] | for 60 keV [ph] | for 90 keV [ph] |
| 4 | 23.3 | 46.9 | 70.5 |
| 5 | 23.2 | 46.6 | 70.0 |
| 6 | 23.1 | 46.3 | 69.5 |
| 7 | 23.0 | 46.0 | 69.0 |

The adaptation of the bias voltage can be used additionally, in particular to compensate the effect of temperature drifts. As an example, typical temperature coefficients for the SPAD breakdown voltage are in the range of -20 mV/K which results in a required bias voltage increase of 20 mV (for example of 26.0 V to 26.2 V). To compensate a negative temperature coefficient of the scintillator light yield, the bias voltage can be adjusted with an overdrive, for example 4 mV/K, which would result in a bias voltage of 26.24 V to compensate the gain loss by one Kelvin.

As an alternative to a real-time threshold adaptation in the keV range, is it also possible in an embodiment to keep the energy thresholds (calibrated but fixed, depending on the scan protocol and location) and to use a set of two-dimensional histogram corrections, depending on rate, and integration time within the pre-processing data stream before the reconstruction.

In summary, the present invention suggests a dynamical adaptation of the energy threshold and, preferably, integration time to provide best possible separation of gamma quanta and their individual energies. A pixel-based adaptation of the energy thresholds is used to acquire energy histograms with stationary energy thresholds.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

The elements of the disclosed devices, apparatus and systems may be implemented by corresponding hardware and/or software elements, for instance appropriate circuits or circuitry. A circuit is a structural assemblage of electronic components including conventional circuit elements, integrated circuits including application specific integrated circuits, standard integrated circuits, application specific standard products, and field programmable gate arrays. Further, a circuit includes central processing units, graphics processing units, and microprocessors which are programmed or configured according to software code. A circuit does not include pure software, although a circuit includes the above-described hardware executing software. A circuit or circuitry may be implemented by a single device or unit or multiple devices or units, or chipset(s), or processor(s).

Any reference signs in the claims should not be construed as limiting the scope.

## Claims

1. Photon counting detector comprising:
a scintillator (21) configured to convert incident gamma radiation into optical photons;
a pixelated photodetector (22) configured to detect the flux of optical photons; and
circuitry (23) configured to iteratively
- determine, per photodetector pixel, a photon count by accumulating the number of optical photons detected by the respective photodetector pixel during an integration time,
- assign the photon count, per photodetector pixel, to one of multiple energy bins by use of energy thresholds separating the multiple energy bins, and
- dynamically adapt, per photodetector pixel or group of photodetector pixels, the energy thresholds for use in a subsequent iteration based on information on the estimated photon count of said photodetector pixel or group of photodetector pixels in the subsequent iteration.

2. Photon counting detector as claimed in claim 1,
wherein the circuitry (23) is configured to dynamically adapt, per photodetector pixel or group of photodetector pixels, the energy thresholds and the integration time for use in the subsequent iteration.

3. Photon counting detector as claimed in claim 1 or 2,
wherein the circuitry (23) is configured to dynamically adapt, per photodetector pixel or group of photodetector pixels, the energy thresholds and/or the integration time for use in the subsequent iteration based on one or more of:
- one or more settings of a detection device comprising the photon counting detector,
- a current of a radiation source of a detection device comprising the photon counting detector,
- position information of an examination object, with respect to the photon counting detector,
- information on one or more earlier photon counts from the same and/or neighboring photodetector pixels and/or from the same and/or neighboring groups of pixels,
- operating temperature of the photon counting detector, and
- one or more operating parameters of the same and/or neighboring photodetector pixels and/or of the same and/or neighboring groups of pixels and/or of pixel elements thereof.

4. Photon counting detector as claimed in any one of the preceding claims,
wherein the circuitry (23) is configured to increase the energy thresholds and/or the integration time the lower the estimated photon count is.

5. Photon counting detector as claimed in one of the preceding claims,
wherein the circuitry (23) is configured to adapted the energy thresholds and/or the integration time by computing them based on a function or by taking them from a look-up table.

6. Photon counting detector as claimed in one of the preceding claims,
wherein the circuitry (23) is configured to adapt the energy thresholds and the integration time by selecting one of several integration modes each indicating respective energy thresholds and integration time.

7. Photon counting detector as claimed in one of the preceding claims,
wherein the circuitry (23) is configured to limit the energy thresholds and/or the integration time not to exceed maximum energy thresholds and/or maximum integration time and not to fall below minimum energy thresholds and/or minimum integration time.

8. Photon counting detector as claimed in any one of the preceding claims,
wherein the pixelated photodetector (22) is a silicon photomultiplier, SiPM, detector, wherein each detector pixel comprises an array of silicon avalanche photo diodes, SPADs.

9. Photon counting detector as claimed in claim 8,
wherein the circuitry (23) is configured to dynamically adapt, per photodetector pixel or group of photodetector pixels, in addition to the energy thresholds a recharge time and/or bias voltage of the SPADs of the respective photodetector pixel or group of photodetector pixels for use in the subsequent iteration.

10. Photon counting detector as claimed in claim 9,
wherein the circuitry (23) is configured to dynamically reduce the recharge time and/or increase the bias voltage the lower the estimated photon count is.

11. Photon counting detector as claimed in claim 2,
wherein the circuitry (23) is configured to apply a deadtime correction function to the photon counts assigned to the energy bins, wherein the deadtime correction function is dynamically adapted based on the integration time.

12. Photon counting detector as claimed in claim 11,
wherein the circuitry (23) is configured to apply a correction factor as correction function that dynamically increases with an increase of the integration time and with an increase of radiation dose of the incident gamma radiation.

13. Photon counting detector as claimed in any one of the preceding claims,
wherein the circuitry (23) is configured to dynamically adapt the energy thresholds and/or the integration time per integration period.

14. Imaging apparatus comprising a photon counting detector (20) as claimed in any one of the preceding claims.

15. Photon counting method comprising:
- determining, per photodetector pixel of a pixelated photodetector (22) that is configured to detect a flux of optical photons converted by a scintillator (21) from incident gamma, a photon count by accumulating the number of optical photons detected by the respective photodetector pixel during an integration time,
- assigning the photon count, per photodetector pixel, to one of multiple energy bins by use of energy thresholds separating the multiple energy bins, and
- dynamically adapting, per photodetector pixel or group of photodetector pixels, the energy thresholds for use in a subsequent iteration based on information on the estimated photon count of said photodetector pixel or group of photodetector pixels in the subsequent iteration.
